# FASCICULE DE BREVET EUROPEEN

(11) **EP 0 765 902 B1**
(45) Date de publication et mention de la délivrance du brevet: **28.05.2003**
(21) Numéro de dépôt: 96202591.2
(22) Date de dépôt: 17.09.1996
(51) Int. Cl.: C08J 9/14, C08G 18/16

(54) **Prémélanges pour la préparation de mousses de polyuréthane**
Vormischungen für die Herstellung von Polyurethanschaumstoffen
Premixes for preparing polyurethane foams

(30) Priorité: 26.09.1995 BE 9500795
(43) Date de publication de la demande: 02.04.1997
(73) Titulaire: SOLVAY (Société Anonyme), 1050 Bruxelles (BE)
(72) Inventeur: Barthelemy, Pierre, 1315 Pietrebais (BE); Leroy, Annie, 6800 Libramont (BE)
(74) Mandataire: Jacques, Philippe

(56) Documents cités:
- EP-A- 0 590 709
- US-A- 3 884 917
- US-A- 5 137 929
- US-A- 5 426 127

## Description

La présente invention se rapporte à des prémélanges destinés à la préparation de mousses de polyuréthane, renfermant un agent gonflant hydrofluoré ne nécessitant pas la présence de stabilisants.

Il est bien connu que les mousses de polyuréthane peuvent être préparées en faisant réagir un isocyanate avec une quantité appropriée d'un polyol ou d'un mélange de polyols, en présence d'un hydrofluoroalcane liquide volatil, lequel est vaporisé par la chaleur libérée par la réaction entre l'isocyanate et le polyol.

Il est de pratique courante, dans le domaine des mousses de polyuréthane, de préparer des prémélanges de certains composants utilisés ultérieurement pour préparer la mousse. Habituellement, les quantités appropriées de polyol, d'agent gonflant, de catalyseur et d'autres additifs éventuels sont mélangées pour former un prémélange. Ce prémélange et la quantité adéquate d'isocyanate sont généralement fournis dans deux réservoirs distincts, l'utilisateur final n'ayant plus alors qu'à mélanger les contenus des deux réservoirs pour fabriquer la mousse. D'autre part, dans les grosses unités de production de mousses, on stocke parfois le polyol et l'agent gonflant en mélange. Ce mélange liquide possède une viscosité plus faible que celle du polyol pur et est dès lors plus facile à pomper et à doser vers l'aire de fabrication de la mousse. Il est toutefois bien connu que les agents gonflants halogénés sont généralement susceptibles d'être partiellement dégradés au contact de certains polyols, ce qui impose en principe l'utilisation de stabilisants.

Le brevet US-A-4986930 annonce que le 1,1-dichloro-1-fluoroéthane (HCFC-141b) peut être utilisé comme agent gonflant et conservé au contact de polyols sans que la présence de stabilisants soit nécessaire. On a toutefois constaté que, dans certains cas, le 1,1-dichloro-1-fluoroéthane peut malgré tout se dégrader de manière notable, notamment en 1-chloro-1-fluoroéthane, en chlorure de vinylidène et en chlorofluorure de vinylidène. Des hydracides peuvent également être générés par cette dégradation.

En outre, on considère actuellement que, pour satisfaire aux réglementations de protection de l'environnement, le 1,1-dichloro-1-fluoroéthane devra être remplacé à terme par un agent gonflant totalement exempt de chlore, présentant de la sorte un potentiel de destruction de l'ozone nul. Dans la demande EP-A-381986, on a notamment proposé d'utiliser dans ce but certains hydrofluoroalcanes en C3-C5. Knopeck G.M., Parker R.C., Richard R.G. et Shankland I.R. (35th Annual Polyurethane Technical/Marketing Conférence, October 9-12, 1994, p. 115-122) et Murphy J.A., Bolmer M., Elsheikh M., Roux J.D., Meynard C. et Volkert O. (CFC and Halon Alternatives Conference; Washington DC; 1993; p. 346-355) ont plus particulièrement étudié l'utilisation de 1,1,1,3,3-pentafluoropropane (HFC-245fa) ou de 1,1,1,3,3-pentafluorobutane (HFC-365mfc). Le brevet US -A- 5426127 cite le HFC-245fa et le HFC-365mfc parmi de nombreux agents gonflants potentiels pour la fabrication de mousses de polyuréthanne. La demande EP-A- 590709 concerne la stabilisation d'hydrofluoroalcanes par des quinones et/ou des composés nitroso.

Un but de la présente invention est d'identifier un hydrofluoroalcane utilisable comme agent gonflant pour la préparation de mousses de polyuréthane, stable en présence de polyols et/ou de catalyseurs classiquement mis en oeuvre lors de cette préparation, satisfaisant aux exigences de respect de l'environnement.

La présente invention a également pour objet de procurer des prémélanges destinés à la fabrication de mousses de polyuréthane, renfermant un agent gonflant de stabilité améliorée à l'encontre de la dégradation induite par les autres constituants des prémélanges.

La présente invention a également pour objet de fournir un procédé pour la préparation de mousses de polyuréthane permettant de stocker en mélange le polyol et l'agent gonflant sans précautions particulières.

L'invention concerne dès lors des prémélanges destinés à la préparation de mousses de polyuréthane ou de polyuréthane modifié, non stabilisés à l'encontre de la degradation potentielle du 1,1,1,3,3-pentafluorobutane, comprenant
a) au moins un polyol,
b) du 1,1,1,3,3-pentafluorobutane comme agent gonflant, et
c) un catalyseur comprenant au moins un composé catalysant la réaction polyol/isocyanate et, éventuellement, un composé, autre qu'un carboxylate de métal alcalin ou un carboxylate d'hydroxyalkylammonium, catalysant la trimérisation des isocyanates.

Par polyuréthane, on entend les polymères issus essentiellement de la réaction de polyols et d'isocyanates. Ces polymères sont obtenus typiquement au départ de formulations présentant un indice d'isocyanate de 100 à 130.

Par polyuréthane modifié, on entend les polymères issus de la réaction de polyols et d'isocyanates qui contiennent, outre des fonctions uréthanes, d'autres types de fonctions, en particulier des cycles triisocyanuriques formés par trimérisation des isocyanates. Ces polyuréthanes modifiés sont régulièrement dénommés polyisocyanurates. Ces polymères sont obtenus typiquement au départ de formulations présentant un indice d'isocyanate de 130 à 450.

Aux fins de la présente invention, on entend par prémélange toute composition comprenant au moins un polyol, au moins un agent gonflant et au moins un catalyseur.

Aux fins de la présente invention, on entend par polyol tout composé renfermant au moins deux groupements fonctionnels réagissant avec les isocyanates. Ces groupements fonctionnels contiennent au moins un atome d'hydrogène actif, tel que défini par la réaction de Zerewittinoff. L'atome d'hydrogène actif est généralement un atome d'hydrogène lié à un atome d'oxygène, d'azote ou de soufre. Tous les polyols classiquement utilisés pour préparer des mousses de polyuréthane peuvent être mis en oeuvre dans les prémélanges selon l'invention. On peut citer notamment les polyéther-polyols et les polyester-polyols.

Le catalyseur des prémélanges selon l'invention, comprend un composé catalysant la formation du lien uréthane -NH - CO - O-, par réaction entre un polyol et un isocyanate ou activant la réaction entre un isocyanate et l'eau, tels que des amines tertiaires et des composés organiques d'étain, de fer, de mercure ou de plomb. Comme amines tertiaires, on peut citer notamment la triéthylamine, la N,N-diméthylcyclohexylamine (DMCHA), la N-méthylmorpholine (NMM), la N-éthylmorpholine, la diméthyléthanolamine, le diaza[2,2,2]bicyclooctane (triéthylènediamine) et des benzylamines substituées comme la N,N-diméthylbenzylamine (DB). Comme composés organiques d'étain ou de plomb, on peut citer notamment le dilaurate de dibutylétain, l'octanoate stanneux et l'octanoate de plomb.

Le catalyseur des prémélanges selon l'invention peut, en particulier lorsque ceux-ci sont destinés à la fabrication de mousses de polyuréthanes modifiés (polyisocyanurates), comprendre un composé catalysant la trimérisation des isocyanates en triisocyanurates, autre qu'un carboxylate de métal alcalin ou un carboxylate d'hydroxyalkylammonium. On a en effet observé que ceux-ci, par exemple l'acétate de potassium, induisent une dégradation notable du 1,1,1,3,3-pentafluorobutane dans les prémélanges. Des composés catalysant la trimérisation des isocyanates utilisables dans les prémélanges selon l'invention sont notamment les triazines. La présence de carboxylates de métaux alcalins et/ou de carboxylates d'hydroxyalkylammonium dans le catalyseur des prémélanges selon l'invention est néanmoins possible, dans une quantité ne dépassant pas 50 % du poids total des composés catalysant la trimérisation des isocyanates.

Dans une forme de réalisation préférée des prémélanges selon l'invention, le catalyseur est exempt de composés catalysant substantiellement la trimérisation des isocyanates. Ces prémélanges préférés comprennent au moins un polyol, du 1,1,1,3,3-pentafluorobutane et comme catalyseur, uniquement un ou plusieurs composés favorisant la réaction polyol / isocyanate.

Outre le polyol, le 1,1,1,3,3-pentafluorobutane et le catalyseur, les prémélanges selon l'invention peuvent en outre contenir divers additifs utilisés habituellement pour préparer des mousses de polyuréthane ou de polyuréthane modifié, tels que notamment de l'eau, des agents tensioactifs, des agents antioxydants, des agents retardateurs de flamme et/ou des pigments. Les prémélanges plus particulièrement préférés selon l'invention sont constitués essentiellement d'au moins un polyol, de 1,1,1,3,3-pentafluorobutane, d'au moins un catalyseur favorisant la réaction polyol / isocyanate et d'au moins un des additifs usuels cités ci-dessus.

Les proportions de polyol, de catalyseur, de 1,1,1,3,3-pentafluorobutane et d'additifs éventuels dans les prémélanges selon l'invention varient, notamment selon l'application, le type de mousse préparé, la nature du polyol et la nature du catalyseur. Elles peuvent être déterminées facilement dans chaque cas particulier. En pratique, la quantité de catalyseur utilisée varie généralement d'environ 0,05 à 10 parts en poids pour 100 parts en poids de polyol. En général, la quantité de 1,1,1,3,3-pentafluorobutane est de 1 à 80 parts en poids pour 100 parts en poids de polyol. De préférence, elle est de 10 à 60 parts en poids pour 100 parts en poids de polyol. Les quantités d'eau, d'agents tensioactifs, d'agents plastifiants et/ou d'agents retardateurs de flamme sont celles classiquement mises en oeuvre pour préparer des mousses de polyuréthane ou de polyuréthane modifié.

Les prémélanges selon l'invention sont destinés à la fabrication de mousses de polyuréthane ou de mousses de polyuréthane modifié (polyisocyanurates). En particulier, d'excellents résultats ont été obtenus avec des prémélanges selon l'invention adaptés à la fabrication de mousses rigides de polyuréthane. Ces prémélanges se sont avérés particulièrement stables, ne donnant quasi pas lieu à une dégradation du 1,1,1,3,3-pentafluorobutane, même dans des conditions de stockage très sévères.

L'invention concerne également un procédé de fabrication de mousses de polyuréthane ou de polyuréthane modifié dans lequel on fait réagir au moins un isocyanate avec un prémélange conforme à l'invention. Tous les isocyanates classiquement utilisés pour fabriquer de telles mousses peuvent être mis en oeuvre dans le procédé selon l'invention. A titre d'exemples, on peut citer des isocyanates aliphatiques, tels que le diisocyanate d'hexaméthylène et des isocyanates aromatiques, tels que le diisocyanate de tolylène ou le diisocyanate de diphénylméthane.

L'invention concerne également un procédé de fabrication de mousses de polyuréthane ou de polyuréthane modifié dans lequel on fait réagir au moins un isocyanate avec au moins un polyol en présence de 1,1,1,3,3-pentafluorobutane, d'au moins un catalyseur et d'autres additifs usuels, qui se caractérise en ce qu'on met en oeuvre le polyol et le 1,1,1,3,3-pentafluorobutane en mélange, non stabilisé à l'encontre de la dégradation potentielle du 1,1,1,3,3-pentafluorobutane induite par le polyol.

On a en effet observé que le 1,1,1,3,3-pentafluorobutane présente une stabilité remarquable en présence de polyols, ce qui permet de les stocker en mélange sans aucune précaution particulière.

Les exemples ci-après illustrent l'invention de manière non limitative.

### Exemples 1 à 3

Trois prémélanges pour la préparation de mousses de polyuréthane ont été préparés dans les proportions pondérales suivantes :
- 50 parts de polyol aminé de type polyéther aromatique ARCOL® 3770 de Arco
- 50 parts de polyéther-polyol aminé VORANOL® RA 640 de Dow
- 1 part d'eau
- 2 parts d'agent tensioactif silicone TEGOSTAB® B1048 de Goldschmidt
- 2 parts de N-méthylmorpholine
- 1,5 parts de N,N-diméthylcyclohexylamine

Le prémélange de l'exemple 1, conforme à l'invention, renfermait 28 parts en poids de 1,1,1,3,3-pentafluorobutane (HFC-365mfc).

Les prémélanges des exemples 2 et 3, donnés à titre de comparaison, renfermaient respectivement 24 parts de 1,1-dichloro-1-fluoroéthane (HCFC-141b) et 28 parts de 1,1,1,3,3-pentafluoropropane (HFC-245fa).

Ces prémélanges ont été conservés à une température constante de 70 °C. Des échantillons ont été prélevés après différents temps de stockage et analysés par chromatographie en phase gazeuse, afin de mesurer les quantités de produits insaturés formés par déshydrohalogénation de l'agent gonflant.

Les résultats sont présentés dans le tableau I ci-après. La comparaison de l'exemple I selon l'invention avec les exemples 2(C) et 3(C), montre que la dégradation subie par le 1,1,1,3,3-pentafluorobutane est négligeable par rapport à celle subie par le 1,1-dichloro-1-fluoroéthane ou le 1,1,1,3,3-pentafluoropropane dans des conditions identiques.

**Tableau I**

| | Exemple 1 | Exemple 2(C) | Exemple 3(C) |
|---|---|---|---|
| Agent gonflant | HFC-365mfc | HCFC-141b | HFC-245fa |
| % molaire d'agent gonflant déshydrohalogéné | | | |
| après 14 jours | 0,02 % | 0,25 % | 0,33 % |
| après 2 mois | 0,08 % | 0,78 % | 0,33 % |

### Exemples 4-9

Des prémélanges adaptés à la préparation de mousses de polyuréthane ont été préparés dans les proportions pondérales reprises au tableau II. Les prémélanges des exemples 4 et 7 renfermaient du 1,1,1,3,3-pentafluorobutane, conformément à l'invention. Les prémélanges des exemples 5(C) et 9(C), fournis à titre de comparaison, contenaient uniquement du 1,1-dichloro-1-fluoroéthane comme agent gonflant. Les prémélanges des exemples 6 (C) et 8 (C), fournis à titre de comparaison contenaient uniquement du 1,1,1,3,3-pentafluoropropane comme agent gonflant. Ces différents prémélanges ont été conservés à une température constante de 70 °C. Des échantillons ont été prélevés après différents temps de stockage et analysés par chromatographie en phase gazeuse, afin de mesurer les quantités de produits insaturés formés par déshydrohalogénation de l'agent gonflant. Les résultats sont présentés dans le tableau II. La comparaison des exemples 4 et 7, conformes à l'invention, respectivement avec les exemples 5(C) et 6(C) et avec les exemples 8(C) et 9(C), montre que la dégradation subie par le 1,1,1,3,3-pentafluorobutane est négligeable par rapport à celle subie par le 1,1-dichloro-1-fluoroéthane ou par le 1,1,1,3,3-pentafluoropropane.

**Tableau II**

| | Ex. 4 | Ex. 5(C) | Ex. 6(C) | Ex. 7 | Ex. 8(C) | Ex. 9(C) |
|---|---|---|---|---|---|---|
| Composition (parts en poids) | | | | | | |
| TERCAROL® RF 55⁽¹⁾ | 100 | 100 | 100 | - | - | - |
| TERCAROL® RF 33⁽²⁾ | - | - | - | 50 | 50 | 50 |
| TERATE® 203⁽³⁾ | - | - | - | 50 | 50 | 50 |
| eau | 1 | 1 | 1 | 1 | 1 | 1 |
| TEGOSTAB® B 1048⁽⁴⁾ | 2 | 2 | 2 | - | - | 2 |
| TEGOSTAB® B 8404⁽⁴⁾ | - | - | - | 2 | 2 | - |
| N-méthylmorpholine | 2 | 2 | 2 | - | - | 2 |
| N,N-diméthylcyclohexylamine | 3 | 3 | 3 | - | - | 1,2 |
| N,N-diméthylbenzylamine | - | - | - | 4,5 | 4,5 | - |
| HFC-365mfc | 28 | - | - | 28 | - | - |
| HCFC-141b | - | 24 | - | - | - | 24 |
| HFC-245fa | - | - | 28 | - | 28 | - |

| % molaire d'agent gonflant déshydrohalogéné | | | | | | |
|---|---|---|---|---|---|---|
| après 14 jours | 0,02 | 0,34 | 0,11 | 0,02 | 0,09 | 0,28 |
| après 1 mois | 0,03 | 0,56 | 0,12 | 0,02 | 0,08 | 0,33 |
| après 2 mois | 0,03 | 1,17 | 0,13 | 0,03 | 0,08 | n.m. |

| | | | | | | |
|---|---|---|---|---|---|---|
| (1) : polyéther-polyol sur base sorbitol, commercialisé par Enichem | | | | | | |
| (2) : polyéther-polyol sur base sucrose, commercialisé par Enichem | | | | | | |
| (3) : polyester-polyol aromatique, commercialisé par Cape Industries | | | | | | |
| (4) : silicones commercialisés par Goldschmidt n.m. : non mesuré | | | | | | |

### Exemples 10-14

Des prémélanges adaptés à la préparation de mousses de polyuréthane modifié ont été préparés dans les proportions pondérales reprises au tableau III. Le prémélange de l'exemple 10 est conforme à l'invention. Les prémélanges des exemples 11(C), 12(C) et 13(C), fournis à titre de comparaison, contenaient un catalyseur de type carboxylate de métal alcalin ou de type carboxylate d'hydroxyalkylammonium quaternaire. Le prémélange de l'exemple 14(C), qui contenait uniquement du 1,1-dichloro-1-fluoroéthane comme agent gonflant est également fourni à titre de comparaison. Ces différents prémélanges ont été conservés à une température constante de 70 °C. Des échantillons ont été prélevés après différents temps de stockage et analysés par chromatographie en phase gazeuse, afin de mesurer les quantités de produits insaturés formés par déshydrohalogénation de l'agent gonflant. Les résultats sont présentés dans le tableau III. La comparaison de l'exemple 10 conforme à l'invention avec les exemples 11(C) à 13(C) illustre l'effet néfaste des carboxylates de métaux alcalins ou d'hydroxyalkylammonium quaternaires sur la stabilité des prémélanges contenant du 1,1,1,3,3-pentafluorobutane, alors qu'avec un catalyseur de trimérisation de type triazine, la dégradation subie par le 1,1,1,3,3-pentafluorobutane est beaucoup plus faible et acceptable. La comparaison des exemples 10 selon l'invention et 14(C) met en évidence que la dégradation du 1,1,1,3,3-pentafluorobutane est beaucoup plus faible que celle du 1,1-dichloro-1-fluoroéthane en présence d'une triazine.

**Tableau III**

| | Exemple 10 | Exemple 11(C) | Exemple 12(C) | Exemple 13(C) | Exemple 14(C) |
|---|---|---|---|---|---|
| Composition (parts en poids) | | | | | |
| TERCAROL® RF 33⁽¹⁾ | 100 | 100 | 100 | 100 | 100 |
| eau | 1 | 1 | 1 | 1 | 1 |
| TEGOSTAB® B 8404⁽²⁾ | 1 | 1 | 1 | 1 | 1 |
| N,N-diméthylcyclohexylamie | 3 | 3 | 3 | 3 | 3 |
| POLYCAT® 41⁽³⁾ | 7 | - | - | - | 7 |
| KACEKAT® KCA⁽⁴⁾ | - | 7 | - | - | - |
| DABCO® TMR⁽⁵⁾ | - | - | 7 | - | - |
| DABCO® TMR2⁽⁶⁾ | - | - | - | 7 | - |
| HFC-365mfc | 20 | 20 | 20 | 20 | - |
| HCFC-141b | - | - | - | - | 40 |

| % molaire d'ag. gonflant déshydrohalogéné | | | | | |
|---|---|---|---|---|---|
| après 14 jours | 0,25 | 0,63 | 1,07 | 0,82 | 0,47 |
| après 1 mois | 0,37 | n.m. | 1,64 | 1,20 | 1,22 |
| après 2 mois | n.m. | 1,42 | 2,57 | 1,95 | 2,63 |
| après 3 mois | 0,62 | n.m. | 2,99 | 2,53 | n.m. |

| | | | | | |
|---|---|---|---|---|---|
| (1) : polyéther-polyol sur base sucrose, commercialisé par Enichem | | | | | |
| (2) : silicone commercialisée par Goldschmidt | | | | | |
| (3) : hexahydro-1,3,5-tris[3-(N,N-diméthylamino)-propyl]-1,3,5-triazine, commercialisé par Air Products and Chemicals | | | | | |
| (4) : acétate de potassium, commercialisé par Solvay Fluor und Derivate GmbH | | | | | |
| (5) : 2-éthylhexanoate de N-2-hydroxypropyltriméthylammonium, commercialisé par Air Products and Chemicals | | | | | |
| (6) : formiate de N-2-hydroxypropyltriméthylammonium, commercialisé par Air Products and Chemicals | | | | | |

### Exemples 15-16

Dans l'exemple 15, une mousse de polyisocyanurate a été préparée par mélange à la main, au départ d'un diisocyanate de diphénylméthane polymérique DESMODUR® 44V20 commercialisé par BAYER et d'un prémélange de constitution suivante :
- 100 parts de polyéther polyol sur base sorbitol TERCAROL® RF55, commercialisé par Enichem
- 1 part d'eau
- 2 parts d'agent tensioactif silicone TEGOSTAB® B 8404 de Goldschmidt
- 3 parts de N,N-diméthylcyclohexylamine
- 7 parts d'hexahydro-1,3,5-tris[3-(N,N-diméthylamino)-propyl]-1,3,5-triazine POLYCAT®41, commercialisé par Air Products and Chemicals
- 60 parts en poids de 1,1,1,3,3-pentafluorobutane (365mfc).

Dans un bol de mélange, on a introduit successivement le polyol, l'agent tensioactif, l'eau et l'agent gonflant puis, après une première agitation, les catalyseurs. On a ensuite ajouté l'isocyanate, à raison de 404,3 parts pour 100 parts de polyol, ce qui correspond à un index 300 (100 fois le rapport entre le nombre de fonctions isocyanate et le nombre de fonctions hydroxyle dans le milieu réactionnel). On a ensuite immédiatement mélangé intimement la composition obtenue pendant 25 secondes au moyen d'un agitateur de type multipale tournant à 1600 tours par minute, puis on l'a transvasée dans un moule à expansion libre où s'effectuent l'expansion et le mûrissage de la mousse.

A l'exemple 16(C), on a utilisé du 1,1,1,3,3-pentafluoropropane (245fa) en lieu et place du 1,1,1,3,3-pentafluorobutane.

Pour chaque mousse, on a mesuré, par analyse chromatographique, la teneur en produits de déshydrohalogénation de l'hydrofluoroalcane au sein de la mousse, immédiatement après sa fabrication et après stockage pendant un mois à 50°C. Les résultats sont rassemblés au tableau IV.

**Tableau IV**

| | Exemple 15 | Exemple 16(C) |
|---|---|---|
| Agent gonflant | 365 mfc | 245 fa |
| % molaire d'agent gonflant déshydrohalogéné | | |
| temps initial | 0,04 % | 0,86 % |
| 50°C ; 1 mois | 0,08 % | 1,16 % |

### Exemples 17-19

Dans l'exemple17, une mousse de polyuréthane a été préparée par mélange à la main, au départ d'un diisocyanate de diphénylméthane polymérique DESMODUR® 44V20 commercialisé par BAYER et d'un prémélange de constitution suivante :
- 100 parts de polyéther polyol sur base sorbitol TERCAROL® RF55, commercialisé par Enichem
- 1 part d'eau
- 2 parts d'agent tensioactif silicone TEGOSTAB® B 8404 de Goldschmidt
- parts de N,N-diméthylcyclohexylamine
- 2 parts de N-méthylmorpholine
- 30 parts en poids de 1,1,1,3,3-pentafluorobutane (365mfc).

Dans un bol de mélange, on a introduit successivement le polyol, l'agent tensioactif, l'eau et l'agent gonflant puis, après une première agitation, les catalyseurs. On a ensuite ajouté l'isocyanate, à raison de 148,3 parts pour 100 parts de polyol, ce qui correspond à un index 110. On a ensuite immédiatement mélangé intimement la composition obtenue pendant 25 secondes au moyen d'un agitateur de type multipale tournant à 1600 tours par minute, puis on l'a transvasée dans un moule à expansion libre où s'effectue l'expansion et le mûrissage de la mousse.

Aux exemples 18(C) et 19(C), on a utilisé du 1,1,1,3,3-pentafluoropropane (245fa) et du 1,1-dichloro-1-fluoroéthane (141b) en lieu et place du 1,1,1,3,3-pentafluorobutane.

Pour chaque mousse, on a mesuré, par analyse chromatographique, la teneur en produits de déshydrohalogénation de l'hydrofluoroalcane au sein de la mousse, immédiatement après sa fabrication et après stockage pendant un mois à 100°C. Les résultats sont rassemblés au tableau V

La comparaison de ces exemples met en évidence que la dégradation subie par le HFC-365mfc est beaucoup plus faible que celle du HFC-245fa et du HCFC-141b dans la mousse de polyuréthane testée.

**Tableau V**

| | Exemple 17 | Exemple 18 | Exemple 19 |
|---|---|---|---|
| Agent gonflant | 365 mfc | 245 fa | 141b |

| % molaire d'agent gonflant déshydrohalogéné | | | |
|---|---|---|---|
| temps initial | 0,03% | 0,05 % | 0,18% |
| 100°C ; 1 mois | 0,03% | 0,14% | 1,76% |

## Revendications

1. Prémélanges destinés à la préparation de mousses de polyuréthane ou de polyuréthane modifié, non stabilisés à l'encontre de la dégradation potentielle de 1,1,1,3,3-pentafluorobutane, comprenant
a) au moins un polyol,
b) du 1,1,1,3,3-pentafluorobutane comme agent gonflant et
c) un catalyseur comprenant au moins un composé catalysant la réaction polyol/isocyanate et, éventuellement, un composé, autre qu'un carboxylate de métal alcalin ou un carboxylate d'hydroxyalkylammonium, catalysant la trimérisation des isocyanates.

2. Prémélanges selon la revendication 1, dans lesquels le catalyseur est constitué uniquement d'un ou plusieurs composés catalysant la réaction polyol / isocyanate.

3. Prémélanges selon la revendication 1 ou 2, contenant en outre divers additifs utilisés habituellement pour préparer des mousses de polyuréthane ou de polyuréthane modifié.

4. Prémélanges selon l'une quelconque des revendications 1 à 3, dans lesquels la quantité de 1,1,1,3,3-pentafluorobutane est de 1 à 80 parts en poids pour 100 parts en poids de polyol.

5. Prémélanges selon l'une quelconque des revendications 1 à 4, adaptés à la fabrication de mousses rigides de polyuréthane.

6. Prémélanges selon l'une quelconque des revendications 1 à 5, dans lesquels le catalyseur est exempt de composés catalysant substantiellement la trimérisation des isocyanates.

7. Procédé de fabrication de mousses de polyuréthane ou de polyuréthane modifié dans lequel on fait réagir au moins un isocyanate avec un prémélange selon l'une quelconque des revendications 1 à 6.

8. Procédé de fabrication de mousses de polyuréthane ou de polyuréthane modifié dans lequel on fait réagir au moins un isocyanate avec au moins un polyol en présence de 1,1,1,3,3-pentafluorobutane et d'au moins un catalyseur, **caractérisé en ce qu'**on met en oeuvre le polyol et le 1,1,1,3,3-pentafluorobutane en mélange, non stabilisé à l'encontre de la dégradation potentielle du 1,1,1,3,3-pentafluorobutane induite par le polyol.

9. Mousses de polyuréthane ou de polyuréthane modifié obtenues par mise en oeuvre d'un procédé conforme à la revendication 7 ou 8.

10. Mousses de polyuréthane rigide conformes à la revendication 9.

## Patentansprüche

1. Vormischungen für die Herstellung von Schaumstoffen aus Polyurethan oder modifiziertem Polyurethan, die gegenüber einer möglichen Zersetzung von 1,1,1,3,3-Pentafluorbutan nicht stabilisiert sind, umfassend:
a) wenigstens ein Polyol,
b) 1,1,1,3,3-Pentafluorbutan als Treibmittel und
c) einen Katalysator, der wenigstens eine Verbindung umfaßt, die die Polyol/Isocyanat-Reaktion katalysiert, und gegebenenfalls eine die Trimerisation von Isocyanaten katalysierende Verbindung umfaßt, die von einem Alkalimetallcarboxylat oder einem Hydroxyalkylammoniumcarboxylat verschieden ist.

2. Vormischungen nach Anspruch 1, worin der Katalysator ausschließlich aus einer oder aus mehreren Verbindungen besteht, die die Polyol/Isocyanat-Reaktion katalysiert bzw. katalysieren.

3. Vormischungen nach Anspruch 1 oder 2, die zusätzlich verschiedene Additive enthalten, die üblicherweise zur Herstellung von Schaumstoffen aus Polyurethan oder modifiziertem Polyurethan verwendet werden.

4. Vormischungen nach einem der Ansprüche 1 bis 3, worin die Menge an 1,1,1,3,3-Pentafluorbutan von 1 bis 80 Gewichtsteile je 100 Gewichtsteile Polyol beträgt.

5. Vormischungen nach einem der Ansprüche 1 bis 4, die an die Herstellung von Polyurethanhartschaumstoffen angepaßt sind.

6. Vormischungen nach einem der Ansprüche 1 bis 5, worin der Katalysator frei von Verbindungen ist, die die Trimerisation von Isocyanaten wesentlich katalysieren.

7. Verfahren zur Herstellung von Schaumstoffen aus Polyurethan oder modifiziertem Polyurethan, worin wenigstens ein Isocyanat mit einer Vormischung nach einem der Ansprüche 1 bis 6 zur Reaktion gebracht wird.

8. Verfahren zur Herstellung von Schaumstoffen aus Polyurethan oder modifiziertem Polyurethan, worin wenigstens ein Isocyanat mit wenigstens einem Polyol in Anwesenheit von 1,1,1,3,3-Pentafluorbutan und von wenigstens einem Katalysator zur Reaktion gebracht wird, **dadurch gekennzeichnet, daß** man das Polyol und das 1,1,1,3,3-Pentafluorbutan im Gemisch einsetzt, das gegenüber einer durch das Polyol induzierten möglichen Zersetzung des 1,1,1,3,3-Pentafluorbutans nicht stabilisiert ist.

9. Schaumstoffe aus Polyurethan oder modifiziertem Polyurethan, erhalten durch Anwendung eines Verfahrens gemäß Anspruch 7 oder 8.

10. Polyurethanhartschaumstoffe gemäß Anspruch 9.

## Claims

1. Premixes intended for the preparation of polyurethane or modified polyurethane foams which are not stabilised with respect to the potential degradation of 1,1,1,3,3-pentafluorobutane comprising
a) at least one polyol,
b) 1,1,1,3,3-pentafluorobutane as blowing agent and
c) a catalyst comprising at least one compound which catalyses the polyol/isocyanate reaction and, optionally, one compound, other than an alkali metal carboxylate or a hydroxyalkylammonium carboxylate, which catalyses the trimerization of isocyanates.

2. Premixes according to Claim 1, in which the catalyst is composed solely of one or a number of compounds which catalyse the polyol/isocyanate reaction.

3. Premixes according to Claim 1 or 2 additionally containing various additives commonly used to prepare polyurethane or modified polyurethane foams.

4. Premixes according to any one of Claims 1 to 3, in which the amount of 1,1,1,3,3-pentafluorobutane is from 1 to 80 parts by weight per 100 parts by weight of polyol.

5. Premixes according to any one of Claims 1 to 4, suited to the manufacture of rigid polyurethane foams.

6. Premixes according to any one of Claims 1 to 5, in which the catalyst is free from compounds which substantially catalyse the trimerization of isocyanates.

7. Process for the manufacture of polyurethane or modified polyurethane foams, in which at least one isocyanate is reacted with a premix according to any one of Claims 1 to 6.

8. Process for the manufacture of polyurethane or modified polyurethane foams, in which at least one isocyanate is reacted with at least one polyol in the presence of 1,1,1,3,3-pentafluorobutane and of at least one catalyst, **characterized in that** the polyol and the 1,1,1,3,3-pentafluorobutane are used as a mixture which is not stabilized with respect to the potential degradation of the 1,1,1,3,3-pentafluorobutane caused by the polyol.

9. Polyurethane or modified polyurethane foams obtained by use of a process in accordance with Claim 7 or 8.

10. Rigid polyurethane foams in accordance with Claim 9.
